# EUROPEAN PATENT APPLICATION

(11) **EP 4 442 351 A1**
(43) Date of publication of application: **09.10.2024**
(21) Application number: 23167058.9
(22) Date of filing: 06.04.2023
(51) Int. Cl.: B01D 53/14, B01D 53/62, B01D 53/77, B01D 53/96

(54) **A METHOD AND SYSTEM FOR SEQUESTERING CARBON DIOXIDE FROM A SOURCE GAS MIXTURE**

(71) Applicant: Hochschule Weihenstephan-Triesdorf Biotechnologie und Bioinformatik, 85354 Freising (DE)
(72) Inventor: Huber, Norbert, 90530 Wendelstein (DE); Gatternig, Bernhard, 90429 Nürnberg (DE)
(74) Representative: Lucke, Andreas

(57) **Abstract**

A method for separating carbon dioxide from a source gas mixture for carbon sequestration, said method comprising the steps of receiving the source gas mixture in a first reactor, the first reactor being at a first pressure and comprising a carrier liquid; forming a carbon dioxide rich liquid based on the carrier liquid and the carbon dioxide in the source gas mixture in the first reactor, thereby separating the source gas mixture into a first fraction absorbed in the carbon dioxide rich liquid and a gaseous second fraction depleted in carbon dioxide; removing the carbon dioxide rich liquid from the first reactor; pressurizing the carbon dioxide rich liquid and transferring the carbon dioxide rich liquid to a second reactor at a second pressure; receiving the pressurized carbon dioxide rich liquid in the second reactor; and forming carbonates in the second reactor based on the pressurized carbon dioxide rich liquid and a silicate-based reactant.

## Description

### FIELD OF THE INVENTION

The present invention is in the field of carbon dioxide sequestration. More precisely, the present invention relates to the separation of carbon dioxide from a source gas mixture and an efficient forming of chemically stable carbonates for carbon sequestration.

### BACKGROUND

As part of current efforts to reduce greenhouse gases, in addition to carbon dioxide free energy generation there is also a demand for carbon dioxide removal and sequestration. For example, biogas-based technology can achieve a negative carbon dioxide footprint, if carbon dioxide can be removed from the biogas itself or from flue gas in biogas power plants. The sequestration of carbon dioxide in chemically stable compounds can allow for permanent storage of the carbon dioxide products, thereby reducing the carbon dioxide footprint of these technologies.

However, both the removal as well as the storage of carbon dioxide generally requires a significant energy investment, which can reduce the impact on the carbon dioxide footprint of the entire process.

Currently explored technologies include enhanced weathering, in which silicate containing rock flour and water are exposed to capture carbon dioxide from the atmosphere. The resulting hydrogen carbonates, such as calcium carbonate, can subsequently be deposited in the ocean as calcium carbonates. As another example, carbon dioxide may be separated from a source gas mixture by ad- or absorption processes, but the required ad-/absorption surfaces and high volumetric streams generally lead to a high operative investment for implementing these technologies.

WO 2022/221861 A1 teaches a method for carbon dioxide capture and storage (CCS), wherein a magnesium chloride hydrate-containing material is reacted with steam to generate hydrochloric acid and magnesium hydroxide, and the magnesium hydroxide is contacted with a gas stream comprising carbon dioxide to provide a partially or fully carbonated stream. Waste material can be contacted with the hydrochloric acid and optionally water to leach mineral ion salts from the waste material into a solution or slurry. The mineral ion salts from the solution or slurry can be recovered, and the mineral ion salts are reacted with the partially or fully carbonated stream to sequester carbon dioxide in the form of mineral ion carbonate salts.

RU 2 761 705 C1 teaches the separation of carbon dioxide from a source gas stream for subsequent use as a gaseous substance, wherein the carbon dioxide is processed in the presence of water to form carbon hydrates, and the carbon enriched liquid fraction is subsequently heated to obtain purified carbon dioxide in gaseous form.

### SUMMARY OF THE INVENTION

The known methods for carbon sequestration however suffer from low conversion rates, high energy cost or require the provision of chemicals, whose production may be energy-expensive, and which may reduce the economic efficiency of the respective process.

In view of this state-of-the-art, the object of the invention is to provide an efficient method for carbon separation from a source gas mixture for carbon sequestration, which can reduce the energy and/or source material requirements present in the prior art.

This object is solved by a method and a system according to the independent claims. The dependent claims relate to preferred embodiments.

According to a first aspect, the invention relates to a method for separating carbon dioxide from a source gas mixture for carbon sequestration. The method comprises the steps of receiving the source gas mixture in a first reactor, the first reactor being at a first pressure and comprising a carrier liquid, and forming a carbon dioxide rich liquid based on the carrier liquid and the carbon dioxide in the source gas mixture in the first reactor, thereby separating the source gas mixture into a first fraction absorbed in the carbon dioxide rich liquid and a gaseous second fraction depleted in carbon dioxide. The method further comprises removing the carbon dioxide rich liquid from the first reactor, and pressurizing the carbon dioxide rich liquid and transferring the carbon dioxide rich liquid to a second reactor at a second pressure, the second pressure being higher than the first pressure. The method further comprises receiving the pressurized carbon dioxide rich liquid in the second reactor, and forming carbonates in the second reactor based on the pressurized carbon dioxide rich liquid and a silicate-based reactant, wherein the second reactor is at the second pressure.

The carbon dioxide rich liquid formed in the first reactor may be efficiently pressurized, e.g. using a pump, for obtaining a pressurized carbon dioxide rich fluid stream, benefitting from a reduced compression work for pressurizing a liquid/slurry phase substance as compared to gaseous phase using a compressor. The pressurized carbon dioxide rich liquid may be transferred to the second reactor via a pipe, and may be forwarded to the second reactor using the pump. The pressurized fluid stream can be reacted with a waste material, which comprises the silicate-based reactants, such as a silicate mineral, for forming carbonates with the carbon dioxide components in the fluid stream at high efficiency. The second pressure may be higher than 80 bar, such as higher than 150 bar, in particular between about 150 bar and about 200 bar.

The process of forming carbonates in the second reactor based on the pressurized carbon dioxide rich fluid and the silicate-based reactant may be exothermic, e.g. depending on the silicate-based reactant, and the generated heat can be used to maintain reaction conditions for forming the carbonates in the second reactor, and the carbonates can be sequestered as a chemically stable substance. In some embodiments, excess heat may be extracted from the second reactor and may be used externally, e.g. in a heating application or in a process for generating power from waste heat. Thus, an energy efficient process for sequestering carbon dioxide from a source gas mixture can be provided.

In preferred embodiments, the source gas mixture comprises one or more of carbon dioxide, oxygen, methane and nitrogen, wherein a carbon dioxide concentration of the source gas mixture is in particular between about 1% and about 90%.

For example, the source gas mixture may be biogas, e.g. raw biogas, and may be provided at ambient pressure to a system for separating carbon dioxide from a methane fraction in the biogas in order to upgrade the raw biogas to biomethane that can be added to natural gas pipe networks. Additionally or alternatively, flue gas from a combustion process, e.g. of biomass, may be used as a source gas mixture, typically comprising carbon dioxide and nitrogen. The source gas mixture may be compressed and guided through a heat exchanger, such as to cool/heat the source gas mixture towards reactor conditions in the first reactor.

The source gas mixture may be introduced into the carrier liquid in the first reactor, e.g. through a nozzle, and the pressure and temperature of the first reactor may be controlled to promote generation of the carbon dioxide rich liquid in the first reactor. The carrier liquid may be an aqueous liquid and the carbon dioxide rich liquid generated in the first reactor may be a water-based solution or slurry comprising carbon dioxide salts and/or solidified carbon dioxide based components, e.g. an aqueous suspension comprising solidified carbon dioxide components.

In preferred embodiments, the carbon dioxide rich liquid is a slurry comprising solidified carbon dioxide based components.

The solidified carbon dioxide components, such as particles comprising carbon dioxide based chemical combinations and/or solidified carbon dioxide, may be effectively removed based on a different density with respect to the carrier liquid and may be efficiently pressurized as part of the slurry using a suitable pump.

In preferred embodiments, forming the slurry comprises forming carbon dioxide hydrates in the first reactor from carbon dioxide gas components of the source gas mixture.

The carbon dioxide hydrates may form based on carbon dioxide gas molecules in a water-based solution in suitable reactor conditions, which may be based on the pressure, temperature, and optionally the presence of additives in the first reactor. Preferably, carbon dioxide clathratehydrates are formed in the first reactor. The carbon dioxide hydrates may precipitate in the carrier liquid, which may result in an aqueous suspension comprising carbon dioxide hydrate particles as the solidified carbon dioxide based components. To maintain suitable reactor conditions, the first reactor may be maintained at the first pressure during a hydrate formation, e.g. through controlling the supply of the pressurized source gas mixture and/or the carrier liquid into the first reactor. The first pressure may be between about 5 bar and about 80 bar, in particular between about 10 bar and about 40 bar, such as 20 bar or 30 bar depending on the carbon dioxide concentration in the source gas.

In preferred embodiments, the first reactor is at a pressure between about 5 bar to about 60 bar to form the carbon dioxide gas hydrates.

The partial pressure at which carbon dioxide gas hydrates may form may be in a range of 5-20 bar. For biogas, a carbon dioxide fraction may be between about 25% to about 50%, such that the pressure of the source gas mixture which is supplied to the first reactor may be between about 10 to about 80 bar. Hydrate formation at these pressures may occur in a temperature interval between about 0°C and about 20°C, e.g. between about 0 °C and about 10 °C, although lower temperatures may be employed if a freezing of the carrier liquid, e.g. a water-based solution, can be prevented, such as through the addition of suitable additives.

In preferred embodiments, the first reactor is at a temperature of between about 0 °C to about 20 °C to form the carbon dioxide gas hydrates.

The source gas mixture may be cooled in a heat exchanger prior to entering the first reactor and/or the first reactor may be coupled to a refrigeration apparatus, such as to maintain reactor conditions for forming carbon dioxide gas hydrates in the first reactor.

In preferred embodiments, the method comprises cooling the first reactor and/or the source gas mixture with a refrigeration system.

For example, a heat exchanger for cooling the source gas mixture and/or the first reactor and/or a supply of the carrier liquid may be coupled to a refrigeration side of a heat pump, such as to maintain suitable conditions for forming the solidified carbon dioxide based components in the first reactor.

The first reactor may be operated as or configured as a semi-batch reactor, wherein carbon dioxide containing gas may be continuously supplied into the carrier liquid in the first reactor, such that the pressure in the first reactor may be held substantially constant. However, the first reactor may also be operated as a batch reactor, i.e. as a closed system without gas or water flow entering or leaving the system during a period of gas hydrate formation, such that the initial conditions and amounts of source gas mixture and carrier liquid may substantially determine the reactor conditions, e.g. as a starting or average pressure.

The reactor conditions for gas hydrate formation may be further controlled or adjusted through the addition of suitable additives. For example, the method may comprise receiving, in the first reactor, additives for controlling a hydrate formation in water, such as tetrahydrofuran (THF), tetra-n-butylammonium bromide (TBAB), tetra n-butyl ammonium chloride (TBAC), Tetra-n-butylammonium fluoride (TBAF), Tetra-n-butylammonium nitrate (TBANO₃), Tetrabutylphosphonium bromide (TBPB), tetrahydropyran (THP) Tetramethylene sulfone (TMS), Propane-Cyclopentane (cP), Methyl-cyclopentane (MCP), cyclohexane (CH), sulfur dioxide (SO₂), Hydrogen sulfide (H₂S), Sodium dodecyl sulfate (SDS), and amino acids, e.g. L-methionine, 1-glycine, 1-tryptophan, 1-norleucine, 1-norvaline, n-hexanoic acid, n-hexylamine, 2-aminoheptanoic acid. The additives should generally occupy less than 10 vol% of the water / liquid within the reactor, such as between about 0.5% and about 10 vol% of the liquid.

The additives may be thermodynamic promoters for improving gas hydrate formation and inhibiting dissociation, but some additives may also act as kinetic promoters enhancing both gas hydrate formation and dissociation. Preferably, the additives act as thermodynamic promoters. The additives may be supplied with the carrier liquid into the first reactor, or may be supplied separately into the first reactor.

In preferred embodiments, the method further comprises separating the solidified carbon dioxide based components from the remaining gaseous components obtained from the source gas mixture in the first reactor.

The carbon dioxide gas hydrates may be removed from the first reactor with parts of the carrier liquid as a carbon dioxide rich solution or slurry. In some embodiments, solidified carbon dioxide components are precipitated in the first reactor and can be removed at a bottom portion of the first reactor. A continuous operation can be realized by a rotary valve or a screw conveyor. For example, carbon dioxide gas hydrates may be removed at regular intervals, e.g. when a certain amount of hydrates have been formed or after a pre-determined period of time. The removal may be based on a mechanical removal of the carbon dioxide rich liquid, e.g. through operation of a rotary valve, which may not require a termination of a reaction in the first reactor.

The carbon dioxide rich liquid removed from the first reactor may be subsequently pressurized using a pressurizing assembly, which may comprise a liquid pump, in particular a slurry pump, for increasing a pressure of the carbon dioxide rich liquid from an initial pressure between about 10 bar to about 30 bar, such as about 20 bar, towards the second pressure, which is higher than the first pressure, and may be higher than about 80 bar, such as higher than about 100 bar, or higher than about 150 bar, e.g. about 200 bar. Thus, the carbon dioxide gas hydrates may be maintained in the carrier liquid without dissociation of the carbon dioxide gas hydrates, and the carbon dioxide fraction may be effectively pressurized with the carrier liquid as a solution or slurry.

In preferred embodiments, the method further comprises removing the carbon dioxide rich liquid comprising solidified carbon dioxide components from the first reactor through a fluid outlet and pressurizing the carbon dioxide rich liquid with a slurry pump.

By removing the carbon dioxide rich liquid, e.g. slurry, from the first reactor, e.g. selectively, the carbon dioxide components can be separated from the remaining gas components of the source gas mixture. Gaseous components not removed with the carbon dioxide rich liquid may be separated through a gas outlet of the first reactor, e.g. for use in a separate process, such as methane separated from raw biogas.

In preferred embodiments, the remaining gaseous components are removed from the first reactor to drive a turbine or a turbine part of a turbocharger for compressing the source gas mixture before it enters the first reactor.

As a result, the energy used to pressurize the source gas mixture may be at least partially recovered, and the efficiency of the method may be increased.

In preferred embodiments, the remaining gaseous components are thermally coupled to an inlet pipe for the source gas mixture for cooling the source gas mixture before the source gas mixture enters the first reactor.

Cooling the source gas mixture using the low temperature remaining gaseous components removed from the first reactor may lower a cooling requirement for the source gas compressor or the first reactor supporting an exothermic reaction, such as carbon dioxide gas hydrate formation, for forming the carbon dioxide rich liquid. For example, the remaining gaseous components may be coupled to the source gas mixture via a heat exchanger along the inlet pipe.

The formation of the carbon dioxide rich liquid may be exothermic, and the method may comprise cooling the first reactor to maintain reactor conditions for forming the carbon dioxide rich liquid, e.g. to maintain reactor conditions for hydrate formation.

In preferred embodiments, the refrigeration system comprises a heat pump thermally coupled to the first reactor with a refrigeration side of the heat pump.

Heat removed from the first reactor by operating the heat pump may be used internally in the system, such as to heat the carbon dioxide rich liquid recovered from the first reactor and/or to heat the second reactor. For example, the heat pump may be thermally coupled to a slurry pipe from the first reactor to the second reactor and/or to the second reactor at a heating side of the heat pump.

The heated and pressurized carbon dioxide rich liquid, e.g. carbon dioxide gas hydrate containing solution or slurry, may be provided to the second reactor, in which carbonates may be formed based on the carbon dioxide and silicate-based reactants.

In preferred embodiments, the method further comprises supplying the silicate-based reactant to the second reactor.

For example, a waste material may be supplied to the second reactor, such as an industrial waste material selected from the group consisting of masonry, concrete, steel furnace slag, biomass fuel production slag, coal waste, and fly ash. The waste material may be powdered to improve the formation of carbonates in the second reactor.

In preferred embodiments, the silicate-based reactant comprises a powdered silicate mineral, such as a powdered nesosilicate inosilicate, orthosilicate, powdered olivine based mineral, powdered basalt mineral, pulverized concrete, and clinker.

For example, basalt, olivine, feldspar and pyroxene, are silicate rich minerals, which can be used for carbonate formation in the second reactor. However, the skilled person will appreciate that a number of different silicate minerals may be used, such as Portlandite, Larnite, Anorthite, Jennite, Rankinite, Akermanite, Forsterite, Wollastonite, Tobermorite, Diopside, Chrysotile, Tremolite, Enstatite, Laumontite, which can occur in basic or metamorphic rocks as well as in cement, slag, or clinker. Rock or waste material comprising silicate minerals may therefore be widely available without significant energy expenditure. The silicate minerals can react with the carbon dioxide components in the carbon dioxide rich liquid in the second reactor to form chemically stable carbonates for carbon dioxide sequestration.

In preferred embodiments, the method further comprises maintaining an ion pressure in the second reactor, and/or supplying an aqueous solution, preferably an aqueous NaCl solution, to the second reactor.

For example, the ion pressure in the second reactor may be increased by supplying salts to the second reactor.

In preferred embodiments, the method further comprises supplying additives for promoting carbonate formation in the second reactor.

For example, salts, such as NaHCO₃ and NaCl, may be introduced in the second reactor to improve the reaction rates for carbonate formation.

Carbonates may be formed in the second reactor at a pressure of about 150 bar and at a temperature between about 100 °C and about 250 °C without requiring significant investment for the second reactor, e.g. using standard grade steel as part of the reactor vessel, while the speed of the reaction may still allow for an industrial use of the process.

In preferred embodiments, the second pressure is above about 50 bar, in particular above about 80 bar, preferably above about 100 bar, and most preferably between about 100 bar and about 200 bar.

In preferred embodiments, the second reactor is maintained at a temperature of above about 100 °C, in particular between about 100 °C and about 250 °C, to form the carbonates.

In principle, carbonates may form at higher temperatures and higher pressures, e.g. above 250°C and/or above 200 bar, but such conditions may increase technical requirements for the reactor vessel and associated parts of the fluid circuit.

In some embodiments, the method further comprises a cycling of an excess of the carrier liquid from the second reactor to the first reactor. For example, the method may comprise removing an excess of the carrier liquid from the second reactor for recovering additives for forming the carbon dioxide rich liquid in the first reactor.

In some embodiments, the method may comprise modulating a pH of the second reactor for producing magnesium or calcium ions in a first cycle phase and for creating carbonates in a second cycle phase of modulating the pH of the second reactor. In some embodiments, the method comprises alternatingly adding acids and alkalis to the second reactor for changing a pH value during a reaction process. The different pH values may promote Mg/Ca ion dissociation from silicate minerals and carbonate formation, respectively.

In some embodiments, the method comprises adding oxalic acid and/or ascorbic acid to the second reactor. The addition of oxalic acid and/or ascorbic acid may promote carbonate formation in the second reactor in the presence of silicate minerals.

According to a second aspect, the invention relates to a system for separating carbon dioxide from a source gas mixture for carbon sequestration. The system comprises a first reactor, a second reactor, and an inlet gas pipe for guiding the source gas mixture to the first reactor. The system is configured to form a carbon dioxide rich liquid in the first reactor at a first pressure based on a carrier liquid and a carbon dioxide fraction of the source gas mixture, thereby separating the source gas mixture into a first fraction absorbed in the carbon dioxide rich liquid and a gaseous second fraction depleted in carbon dioxide. The first reactor is coupled to an outlet pipe for removing the carbon dioxide rich liquid from the first reactor. The system further comprises a pressurizing assembly for increasing a pressure of the carbon dioxide rich liquid removed from the first reactor, and a fluid inlet pipe for supplying the carbon dioxide rich liquid from the pressurizing assembly to the second reactor. The second reactor is arranged to receive the carbon dioxide rich liquid pressurized by the pressurizing assembly, and to maintain a reaction of carbon dioxide components absorbed in the carbon dioxide rich liquid and a silicate-based reactant in the second reactor for forming carbonates at a second pressure, wherein the second pressure is higher than the first pressure.

The system may implement the method according to the first aspect or any combination of its embodiments. In particular, the system according to the second aspect may also benefit from any feature of the preferred embodiments of the first aspect. The system may comprise suitable heaters, heat exchangers, pumps and additional inlets to the first and/or second reactor to implement the respective embodiments of the method according to the first aspect, or any combination thereof.

The system may be configured to maintain the first reactor at the first pressure to solidify carbon dioxide components of the source gas mixture in an aqueous solution, and the system may comprise a gas outlet for removing remaining gas components from the first reactor. The system may further be configured to maintain a reaction of the solidified carbon dioxide components and a silicate-based reactant in the second reactor for forming carbonates at the second pressure, which is higher than the first pressure.

In preferred embodiments, the system is configured to maintain reaction conditions in the first reactor for forming carbon dioxide gas hydrates.

In preferred embodiments, the system further comprises a heat pump thermally coupled to the first reactor with a refrigeration side and thermally coupled to the second reactor and/or to a slurry pipe from the first reactor to the second reactor at a heating side.

The pressurizing assembly may pressurize the carbon dioxide rich liquid using a pump.

In preferred embodiments, the pressurizing assembly further comprises a slurry pump for increasing a pressure of the carbon dioxide rich liquid removed from the first reactor.

The slurry pump may increase a pressure of the carbon dioxide rich liquid comprising solidified carbon dioxide components, such as carbon dioxide gas hydrates towards the second pressure.

In preferred embodiments, the pressurizing assembly further comprises a venturi nozzle coupled to a pressurized water stream and a slurry pipe, wherein the venturi nozzle is configured to draw in the carbon dioxide rich liquid and increase the pressure of the carbon dioxide rich liquid towards a pressure of the pressurized water stream.

The venturi nozzle may draw in the slurry at a constricted section of a pipe, such as to draw in the slurry at a lower pressure and mix the slurry with an aqueous carrier liquid at a higher pressure, such as water at a pressure of above 100 bar, e.g. at about 150 bar. As a result, technical requirements on the pressurizing assembly, in particular of a slurry pump, may be reduced, which may reduce an operative cost of the system and may reduce maintenance requirements of slurry pumps in the system.

For example, a pump may draw in the carbon dioxide rich liquid from the first reactor and increase a pressure of the carbon dioxide rich liquid from the first pressure to an intermediate pressure, such as 100 bar. The carbon dioxide rich liquid at the intermediate pressure may be drawn into a constricted pipe section of a pressurized water pipe, e.g. at an elevated pressure of about 150 bar, such as to increase the pressure of the carbon dioxide rich liquid towards the elevated pressure.

In preferred embodiments, the gas outlet of the first reactor is coupled to a turbine or a turbine part of a turbocharger for compressing the source gas mixture before it enters the first reactor.

In preferred embodiments, the gas outlet is thermally coupled to the inlet gas pipe for the source gas mixture for cooling the source gas mixture before the source gas mixture enters the first reactor. At the same time the remaining gas removed via the gas outlet can be heated and may thus have a higher enthalpy that can be used in the afore-mentioned turbine.

The system may be controlled using a processing system, which may control system parameters, such as reaction conditions or valve states based on sensors readings, e.g. through communication with system components. The processing system may comprise a single processing unit or may comprise a plurality of processing units, which may be functionally connected. The processing units may comprise a microcontroller, an ASIC, a PLA (CPLA), an FPGA, or other processing devices, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like. For example, the processing system may be connected to measurement sensor monitoring temperatures and/or a pressure of different components in the system, e.g. in pipes or of the first reactor and/or the second reactor. The processing system may process the measurement signals and may therefrom determine control signals for maintaining reaction conditions in the first and/or second reactor, e.g. through control of fluid valves, pumps, heating/refrigeration assemblies, or the like.

According to a third aspect, the invention relates to a non-transitory medium comprising machine-readable instruction, which, when executed by a processing system, implement a method according to the first aspect and/or a system according to the second aspect.

### DETAILED DESCRIPTION OF EMBODIMENTS

The features and numerous advantages of the method and system according to the present invention will best be understood from a detailed description of preferred embodiments with reference to the accompanying drawings, in which:
- Fig. 1: schematically illustrates a system for separating carbon dioxide from a source gas mixture and for forming chemically stable carbonates for sequestration according to an example;
- Fig. 2: illustrates a flow diagram of a method for separating carbon dioxide from a source gas mixture and for forming chemically stable carbonates for sequestration according to an example;
- Fig. 3: schematically illustrates a system for carbon sequestration according to an example;
- Fig. 4: schematically illustrates a system for carbon sequestration according to another example; and
- Fig. 5: schematically illustrates a part of a system for carbon sequestration according to another example.

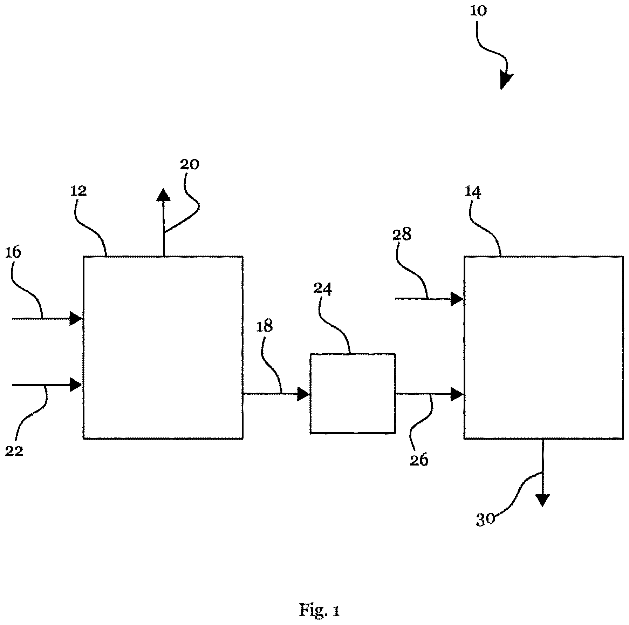

Fig. 1 schematically illustrates an example of a system 10 for separating carbon dioxide from a source gas mixture. The system 10 comprises a first reactor 12, a second reactor 14, and an inlet gas pipe 16 for guiding the source gas mixture to the first reactor 12. The system 10 is configured to maintain the first reactor 12 at a first pressure to form a carbon dioxide rich liquid based on a carrier liquid and a carbon dioxide fraction of the source gas mixture. The first reactor 12 is connected to an outlet pipe 18 for removing a solution or slurry of the carrier liquid comprising carbon dioxide components from the first reactor 12, and to a gas outlet 20 for removing remaining gas components from the first reactor 12, wherein a carbon dioxide concentration of the remaining gas components is smaller than a carbon dioxide concentration of the source gas mixture. Preferably, more than 50%, in particular more than about 80%, such as about 90% or more, of the carbon dioxide fraction in the source gas mixture can be absorbed in the carrier liquid. The carrier liquid may be supplied, e.g. as an aqueous solution, via a second inlet 22 of the first reactor 12, wherein the supply of the aqueous solution may be configured to compensate for a withdrawal of the solution or slurry from the first reactor 12.

The illustrated system 10 further comprises a pressurizing assembly 24 for increasing a pressure of the solution or slurry removed from the first reactor 12, and an inlet pipe 26 for supplying the solution or slurry from the pressurizing assembly 24 to the second reactor 14. The second reactor 14 is arranged to receive the solution or slurry pressurized by the pressurizing assembly 24, and to maintain a reaction of carbon dioxide components and a silicate-based reactant in the second reactor 14 for forming carbonates at a second pressure, which is higher than the first pressure. The silicate-based reactant may be provided through a second inlet 28, for supporting a reaction of forming the carbonates in the second reactor 14.

Optional additives may be provided with the silicate-based reactant via the second inlet 28, may be provided through a separate inlet (not shown in Fig. 1), or may be mixed into and provided alongside the pressurized solution or slurry into the second reactor 14. The carbonates may be removed via an outlet 30 of the second reactor 14 and may be subsequently stored as part of a carbon capture and storage process.

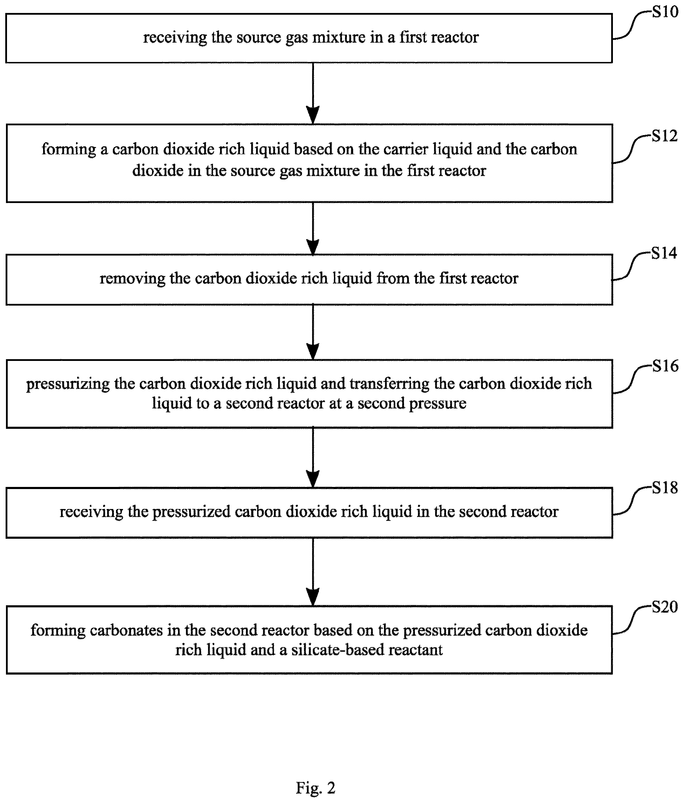

Fig. 2 illustrates an example method for separating carbon dioxide from a source gas mixture for carbon sequestration, which may be implemented using the system 10 shown in Fig. 1. The method comprises the steps of receiving the source gas mixture in a first reactor 12 (S10), the first reactor 12 being at a first pressure and comprising a carrier liquid, and forming a carbon dioxide rich liquid based on the carrier liquid and the carbon dioxide in the source gas mixture in the first reactor 12 (S12), thereby separating the source gas mixture into a first fraction absorbed in the carbon dioxide rich liquid and a gaseous second fraction depleted in carbon dioxide. The method further comprises removing the carbon dioxide rich liquid from the first reactor 12 (S14), and pressurizing the carbon dioxide rich liquid and transferring the carbon dioxide rich liquid to a second reactor 14 at a second pressure (S16), the second pressure being higher than the first pressure. The method further comprises receiving the pressurized carbon dioxide rich liquid in the second reactor 14 (S18), and forming carbonates in the second reactor 14 based on the pressurized carbon dioxide rich liquid and a silicate-based reactant (S20), wherein the second reactor 14 is at the second pressure.

The carbon dioxide rich liquid may be obtained by solving carbon dioxide or carbon dioxide based compounds in the carrier liquid or by forming solidified carbon dioxide particles in the carrier liquid, such as a carbon dioxide gas hydrate. The solidified carbon dioxide particles may be removed with the carrier liquid as a solution or slurry for facilitating a pressurization of the carbon dioxide fraction of the source gas mixture.

The carrier liquid may be an aqueous solution, and the compressed source gas mixture may be received in the aqueous solution through a nozzle submerged in the aqueous solution, such as a nozzle at an end of a dip tube, or an inlet gas pipe, for dispensing the source gas mixture into the aqueous solution. Preferably, the aqueous solution is stirred, e.g. via mechanical stirring using an agitator, to improve mixing in the first reactor 12 and thereby formation of the carbon dioxide rich liquid, e.g. via carbon dioxide gas hydrate formation in the aqueous solution. Instead of a stirred reactor, a spray reactor or a bubble reactor or any other reactor could also be used.

Pressurizing the carbon dioxide rich liquid comprising carbon dioxide in condensed form, e.g. using a liquid or slurry pump, may reduce a compression energy required for increasing a pressure of the carbon dioxide and may facilitate imposing suitable reaction conditions for the second reactor 14. Specifically, carbonates may be formed in the second reactor 14 at a pressure of more than about 100 bar, such as between about 150 bar and about 200 bar. Further, the pressurized carbon dioxide rich liquid may be heated, e.g. by flowing the carbon dioxide rich liquid past a heat exchanger, such as to heat the carbon dioxide rich liquid to a temperature of more than about 150°, in particular to a temperature between about 150 °C and about 250 °C.

The silicate-based reactant may be part of a pulverized waste material supplied to the second reactor 14, such as pulverized rock, cement, slag or clinker, and should comprise silicate minerals for the formation of the carbonates in the second reactor 14. The resulting carbonates may precipitate in the second reactor 14 and may be removed via an outlet 30 of the second reactor 14.

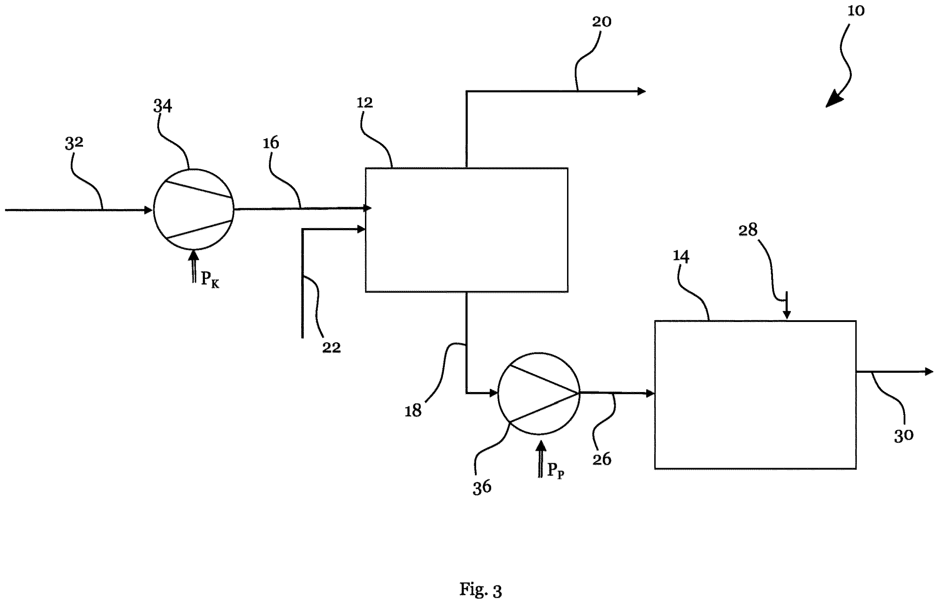

Fig. 3 illustrates a system 10 suitable for implementing the method shown in Fig. 2 according to an example. The diagram comprises providing a source gas mixture 32 towards a compression assembly 34 (indicated as a compressor), which may compress the source gas mixture 32 towards a first pressure of a first reactor 12, at the cost of a compression power P_{K}. For example, the source gas mixture 32 may be received at substantially ambient pressure and may be pressurized towards a first pressure of the first reactor 12 of about 20 bar by the compression assembly 34. The pressurized source gas mixture 32 may subsequently be received in the first reactor 12 via a first inlet 16.

In the first reactor 12, the source gas mixture 32 may be introduced into a water-based carrier liquid, which may be supplied separately via a second inlet 22 to form a carbon dioxide rich liquid. Specifically, a temperature of the first reactor 12 may be maintained in a temperature window for carbon dioxide gas hydrate formation, such as between about 0 °C and about 20 °C, and a carbon dioxide fraction of the source gas mixture 32, such as flue gas or biogas, may at least partially solidify as a result of the formation of carbon dioxide gas hydrates.

The carbon dioxide gas hydrates may precipitate as solidified particles in the first reactor 12 and may be removed from the first reactor 12, e.g. selectively, via an outlet 18, with the water-based carrier liquid as an aqueous solution or a slurry comprising solidified carbon dioxide particles, in the following also referred to as solution or slurry. A remaining gas fraction of the source gas mixture 32 may be removed via a separate outlet 20, e.g. for further processing.

The slurry is subsequently pressurized using a slurry pump 36 towards a second pressure of a second reactor 14 of more than about 100 bar, such as between about 150 bar and about 200 bar, by expending a pressurization power P_{P}. In addition, the slurry may be heated towards a temperature of the second reactor 14 of typically more than 100 °C, such as between about 150 °C and 250 °C.

In the second reactor 14, the pressurized slurry may be reacted with a silicate material, e.g. a silicate containing waste material, which can be supplied via a second inlet 28, the silicate material comprising silicate minerals for carbonate formation. For example, the silicate material may comprise a powdered silicate mineral, such as a powdered nesosilicate (orthosilicate), e.g. powdered olivine, powdered basalt, inosilicate, Cyclosilicates, Tectosilicates, Phyllosilicates, or Sorosilicates, which may be comprised in pulverized rock or clinker.

The silicate mineral may react with the carbon dioxide contained in the solution or slurry to form carbonate minerals, such as magnesite or calcite, which may be chemically stable for long-term carbon capture and storage. For example, at suitable pressure and temperatures, the carbon dioxide may react in an exothermic reaction with olivine in the second reactor 14 according to

Mg₂SiO₄ + 2CO₂(g) ⇒ 2MgCO₃ + SiO₂.

Similarly, the carbon dioxide may react in an exothermic reaction with calcium silicate in the second reactor 14 according to

CaSiO₃ + CO₂(g) ⇒ CaCO₃ + SiO₂,

just to give another example. The carbonates formed in the second reactor 14 may subsequently be recovered via the outlet 30 and may be removed for long term storage.

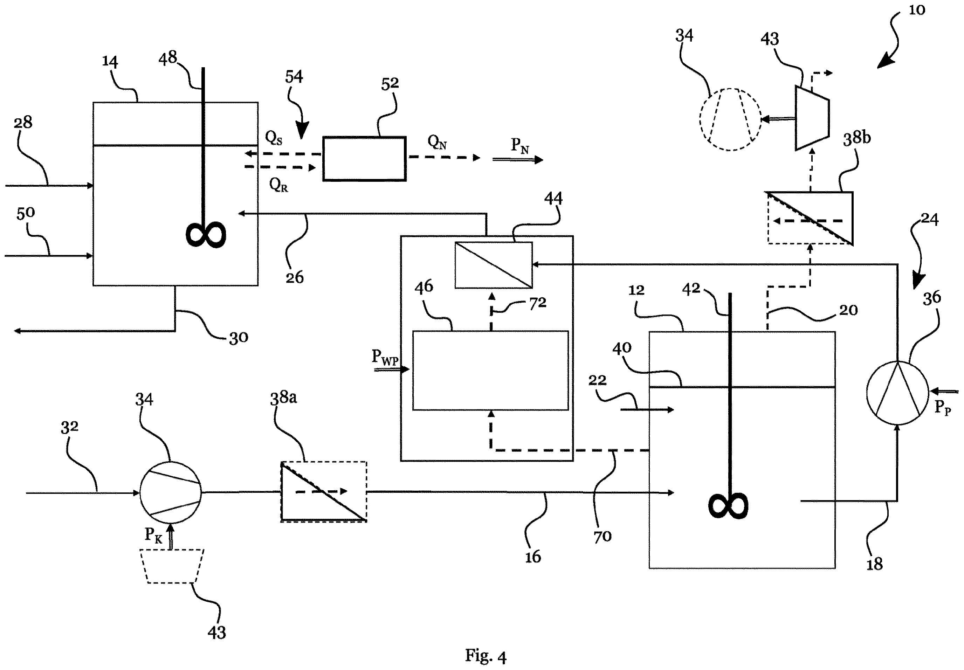

Fig. 4 illustrates another example of a system 10 for implementing the method in Fig. 2 and/or for controlling the system in Fig. 1, similar to the example of Fig. 3, with additional detail.

A source gas mixture 32, such as a flue gas with a carbon dioxide content of about 30 %, or a biogas with a carbon dioxide content of about 50 %, is compressed in a compression assembly 34, which may comprise a turbocharger and/or a compressor for increasing a pressure of the source gas mixture 32 to a pressure between about 10 bar and about 80 bar, such as about 20 bar or about 30 bar. The source gas mixture 32 flows through a heat exchanger 38a to change a temperature of the source gas mixture 32 towards a temperature in the first reactor 12, e.g. by cooling the source gas mixture towards a temperature for hydrate formation in the first reactor 12 of between about 0 °C and about 10 °C.

The source gas mixture 32 may then flow through the first inlet 16 into the first reactor 12, in which the source gas mixture 32 can be mixed with a carrier liquid 40 for hydrate formation, e.g. through a dip tube (not shown) into the carrier liquid 40 or mixed with the carrier liquid with the help of a spray nozzle.

As illustrated in the figure, the first reactor 12 may be configured to promote a circulation of the carrier liquid 40 in the first reactor 12, e.g. through an agitator 42, which may mechanically stir the carrier liquid 40. However, the skilled person will appreciate that instead of the illustrated agitator 42, other stirring or circulation mechanisms for improving a mixing of the source gas mixture 32 and the carrier liquid 40 may be used in embodiments, such as by implementing the first reactor 12 as a tube reactor, a spray reactor, or a bubble column reactor.

The conditions of the first reactor 12 may be maintained for carbon dioxide gas hydrate formation in the carrier liquid 40, e.g. a water-based liquid, by maintaining a temperature of the first reactor 12 between about 0 °C and about 10 °C and by maintaining a first pressure of the first reactor 12 between about 5 °bar and about 80 °bar, such as 20 bar or 30 bar.

The hydrate formation may be accelerated or improved to preferable pressure intervals in the presence of additives in the first reactor 12, such as Tetra-n-butylammonium bromide (TBAB), tetrahydrofuran (THF), cyclopentane (CP), and Propane, which may be added to the carrier liquid 40 and/or the first reactor 12 at a concentration of between about 0.5 vol.% and 10 vol.% , e.g. via the inlet pipe 22.

The carbon dioxide gas hydrates formed in the first reactor 12 may precipitate in the first reactor 12 and may be removed with portions of the carrier liquid 40 as an aqueous slurry comprising solidified carbon dioxide components via an outlet pipe 18, while a remaining gas fraction of the source gas mixture 32 depleted of carbon dioxide may be removed via a second gas outlet 20.

The remaining gas fraction may be flown through a heat exchanger 38b, which may be another side of the heat exchanger 38a for cooling the source gas mixture 32 (illustrated in the example of Fig. 4 through respective dashed/solid portions of the heat exchanger 38a, 38b). Thus, the remaining gas fraction removed from the first reactor 12 may be used to cool the source gas mixture 32 prior to entering the first reactor 12.

Additionally or alternatively, the remaining gas fraction may flow through a turbine 43, which may be mechanically coupled to components of the compression assembly 34, e.g. as part of a turbocharger. As a result, a compression energy expended for compressing the remaining gas fraction may be partially recovered for efficiently maintaining a process of the system 10. The slurry removed via the outlet pipe 18 may be pressurized using the pressurizing assembly 24, illustrated with a slurry pump 36 in the example of Fig. 4, towards a pressure of a second reactor 14 for carbonate formation. For example, the slurry may be pressurized towards a pressure of between about 150 bar and 200 bar.

The slurry may be flown through a heat exchanger 44 for increasing a temperature of the slurry before or after pressurizing it with the pressurizing assembly 24. The heat exchanger 44 may be coupled to a heat pump 46, which may be thermally coupled to the first reactor 12 for cooling the first reactor 12 on its cold side, according to a cooling power 70, and for heating the slurry at its hot side, according to a heating power 72, by expending an electrical power P_{WP}.

The pressurized and heated slurry may be transferred into the second reactor 14 via the inlet pipe 26 to react with a silicate material, which may be supplied via a separate inlet 28.

The second reactor 14 may be equipped with an agitator 48 to promote a mixing of reactants, and the system 10 may be configured to maintain the reaction in the second reactor 14, e.g. through the addition of an ion solution for maintaining an ion pressure in the second reactor 14, and/or through the addition of additives for increasing a reaction rate. For example, salts, such as NaHCO₃ and NaCl may be introduced in the second reactor 14 to improve the reaction rates for carbonate formation, and Mg/Ca salts or an aqueous Ca++/Mg++ solution may be supplied, e.g. via a third inlet 50, to maintain an ion pressure in the second reactor 14. For example, Na₂CO₃, CaCl₂, or MgCl₂ salts, or an NaCl/NaHCO₃ buffer solution may be supplied to the second reactor 14.

Further, the conditions of the second reactor 14 may be maintained for carbonate formation by maintaining a temperature of the second reactor 14 between about 100 °C and about 250 °C, such as 150 °C or 200 °C, and by maintaining a pressure of the second reactor 14 between about 100 °bar and about 200 °bar, such as 150 bar.

The reaction in the second reactor 14 may be exothermic, and heat generated in the second reactor 14 may be removed, e.g. by thermally coupling the second reactor 14 via a suitable thermal coupling 54 to a heat storage 52 and/or to a heat exchanger, such as the heat exchanger 44 for heating the slurry obtained from the first reactor 12. Thus, the thermal coupling 54 may be used for cooling the second reactor 14 during operation. Additionally or alternatively, the thermal coupling 54 may be used to heat the second reactor 14 during a start-up phase of the second reactor 14.

Using the heat storage 52, the heat Q_{R} generated in the second reactor 14 may be buffered, e.g. in a batch mode process, and the stored heat Qs may be used to restart a reaction in the second reactor 14 and/or to heat the (pressurized) slurry obtained in the first reactor 12. A remaining excess heat Q_{N} may be used in a separate process, e.g. as high temperature energy which is externally available. The excess heat Q_{N} can be used to produce electrical energy, e.g. for the pumps and compressors of the system 10, and/or may be made available externally as a heating power P_{N} of the system 10.

The skilled person will appreciate that, although Fig. 4 illustrates an embodiment with a heat pump 46 transferring heat from the first reactor 12 and/or the inlet pipe 16 to the second reactor 14 and/or the slurry in the outlet pipe 18 or the inlet pipe 26, in other embodiments, separate cooling and/or heating assemblies may be employed to control a temperature of the source gas mixture 32, the first reactor 12, the second reactor 14, and the (pressurized) slurry.

Further, the skilled person will appreciate that although the preceding examples mainly refer to the first reactor 12 and the second reactor 14 as being implemented as stirred reactors operating in a semi-batch mode, other reactor types may be used to implement the method of Fig. 2. For example, the first reactor 12 and/or the second reactor 14 may be implemented as a tube reactor, a spray reactor, or a bubble column reactor, and the reactor types may be the same or different. For example, the first reactor 12 may be implemented as a spray reactor, and the second reactor 14 may be implemented as a stirred reactor. Further, the first reactor 12 and/or the second reactor 14 may each be driven continuously, in a semi-batch mode, or in a batch mode, depending on the implementation.

For example, the source gas mixture 32 may be supplied continuously to the first reactor 12, and the slurry comprising solidified carbon dioxide gas hydrate particles may be removed at pre-determined time intervals or continuously. The slurry may subsequently be pressurized, heated, and guided into the second reactor 14 for a batch mode or semi-batch mode or continuous mode carbonate formation.

The resulting solid mineral carbonates, such as magnesite or calcite, may be sequestered for long term carbon storage, and may be removed, optionally in combination with hydrogen carbonates in solution, via the outlet 30.

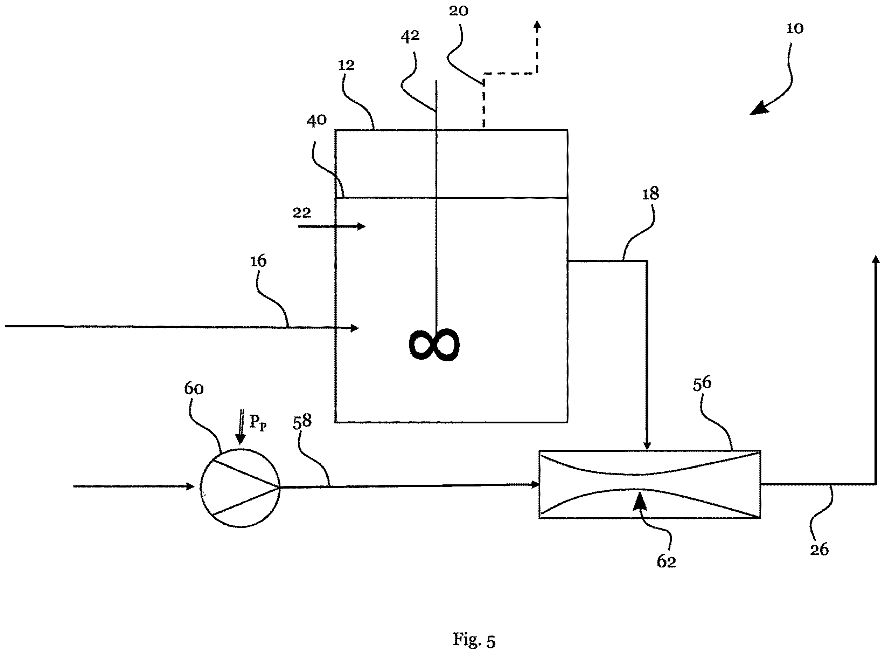

Fig.5 illustrates a partial view of a system 10 for carbon sequestration according to an example. The system 10 comprises a first reactor 12, similar to the first reactor 12 illustrated in Fig. 4, configured to receive a source gas mixture 32 via an inlet pipe 16 and to form carbon dioxide gas hydrates in an aqueous carrier liquid 40 at a pressure of about 20 bar or about 30 bar and a temperature between about 0 °C and about 10 °C. Solidified carbon dioxide gas hydrates may be removed from the first reactor 12 through an outlet pipe 18, and may optionally be pressurized by a slurry pump (not shown).

In addition, the system 10 illustrated in Fig. 5 comprises a Venturi nozzle assembly 56, comprising a liquid pipe section, which narrows along the extension of the pipe. The Venturi nozzle assembly 56 is connected on one side to a pressurized water pipe 58, in which water can be pressurized by a water pump 60, and on its opposite side to the inlet pipe 26 of the second reactor 14. At a narrowed section 62 of the Venturi nozzle assembly 56, the Venturi nozzle assembly 56 may be connected to the outlet pipe 18, such that the Venturi nozzle assembly 56 may draw in and pressurize a slurry obtained from the first reactor 12 based on the Venturi effect.

The Venturi nozzle assembly 56 may pressurize the slurry from an intermediate pressure, e.g. 80 or 100 bar towards a pressure of about 150 bar without the requirement of a slurry pump 36, which may reduce a wear in the system 10 and may increase a lifetime of the components of the system 10.

The pressurizing assembly 24 with or without the venturi nozzle assembly 56 can pressurize the slurry removed from the first reactor 12 at a first pressure towards a second pressure of the second reactor 14. The skilled person will appreciate that the pressurizing assembly 24 may increase the pressure of the slurry to a value, which may be smaller, equal to, or higher than the second pressure. Preferably, an intermediate pressure of the slurry after having been pressurized by the pressurizing assembly is close to the second pressure of the second reactor 14, e.g. within a range of 10% or 20% around the second pressure, and is most preferably higher than the second pressure, such as to promote a transfer of the pressurized slurry into the second reactor 14.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 10: system
- 12: first reactor
- 14: second reactor
- 16: inlet pipe of the first reactor
- 18: outlet pipe of the first reactor
- 20: second outlet
- 22: second inlet pipe
- 24: pressurizing assembly
- 26: inlet pipe of the second reactor
- 28: second inlet of the second reactor
- 30: outlet of the second reactor
- 32: source gas mixture
- 34: compression assembly
- 36: slurry pump
- 38, 38a, 38b: heat exchanger
- 40: carrier liquid
- 42: agitator
- 43: turbine
- 44: heat exchanger
- 46: heat pump
- 48: agitator
- 50: third inlet
- 52: heat storage
- 54: thermal coupling
- 56: Venturi nozzle assembly
- 58: water pipe
- 60: water pump
- 62: narrowed section
- 70: cooling power
- 72: heating power

## Claims

1. A method for separating carbon dioxide from a source gas mixture (32) for carbon sequestration, said method comprising the steps of:
receiving the source gas mixture (32) in a first reactor (12), the first reactor (12) being at a first pressure and comprising a carrier liquid (40);
forming a carbon dioxide rich liquid based on the carrier liquid (40) and the carbon dioxide in the source gas mixture (32) in the first reactor (12), thereby separating the source gas mixture (32) into a first fraction absorbed in the carbon dioxide rich liquid and a gaseous second fraction depleted in carbon dioxide;
removing the carbon dioxide rich liquid from the first reactor (12);
pressurizing the carbon dioxide rich liquid and transferring the carbon dioxide rich liquid to a second reactor (14) at a second pressure, the second pressure being higher than the first pressure;
receiving the pressurized carbon dioxide rich liquid in the second reactor (14); and
forming carbonates in the second reactor (14) based on the pressurized carbon dioxide rich liquid and a silicate-based reactant, wherein the second reactor (14) is at the second pressure.

2. The method of claim 1, wherein the source gas mixture (32) comprises one or more of carbon dioxide, oxygen, methane and nitrogen, wherein a carbon dioxide concentration of the source gas mixture (32) is in particular between about 1% and about 90%.

3. The method of claim 1 or 2, wherein the carbon dioxide rich liquid is a slurry comprising solidified carbon dioxide based components;
wherein forming the slurry in particular comprises:
forming carbon dioxide hydrates in the first reactor (12) from carbon dioxide gas components of the source gas mixture (32);
wherein the first reactor (12) is preferably at a pressure between about 5 bar to about 60 bar to form the carbon dioxide gas hydrates; and/or
wherein the first reactor (12) is preferably at a temperature of between about 0 °C to about 20 °C to form the carbon dioxide gas hydrates.

4. The method of any one of the preceding claims, wherein the method further comprises separating the solidified carbon dioxide based components from the remaining gaseous components obtained from the source gas mixture (32) in the first reactor (12).

5. The method of any one of the preceding claims, wherein the method further comprises: removing the carbon dioxide rich liquid from the first reactor (12) through a fluid outlet (18) and pressurizing the carbon dioxide rich liquid with a slurry pump (36).

6. The method of any one of the preceding claims, wherein the remaining gaseous components are removed from the first reactor (12) to drive a turbine (43) or a turbine part (43) of a turbocharger for compressing the source gas mixture (32) before it enters the first reactor (12); and/or
wherein the remaining gaseous components are thermally coupled to an inlet pipe (16) for the source gas mixture (32) for cooling the source gas mixture (32) before the source gas mixture (32) enters the first reactor (12).

7. The method of any one of the preceding claims, wherein the method comprises cooling the first reactor (12) and/or the source gas mixture (32) with a refrigeration system;
wherein the refrigeration system in particular comprises a heat pump (46) thermally coupled to the first reactor (12) with a refrigeration side of the heat pump (46); and/or
wherein the refrigeration system in particular comprises a heat pump (46) thermally coupled to a slurry pipe (18, 26) from the first reactor (12) to the second reactor (14) and/or to the second reactor (14) at a heating side of the heat pump (46).

8. The method of any one of the preceding claims, wherein the method further comprises supplying the silicate-based reactant to the second reactor (14); and/or
wherein the silicate-based reactant comprises a powdered silicate mineral, such as a powdered nesosilicate inosilicate, orthosilicate, powdered olivine based mineral, powdered basalt mineral, pulverized concrete and clinker.

9. The method of any one of the preceding claims, wherein the method further comprises maintaining an ion pressure in the second reactor (14), and/or supplying an aqueous solution, preferably an aqueous NaCl solution, to the second reactor (14); and/or
wherein the method further comprises supplying additives for promoting carbonate formation in the second reactor (14).

10. The method of any one of the preceding claims, wherein the second pressure is above about 50 bar, in particular above about 80 bar, preferably above about 100 bar, and most preferably between about 100 bar and about 200 bar; and/or
wherein the second reactor (14) is maintained at a temperature of above about 100 °C, in particular between about 100 °C and about 250 °C, to form the carbonates.

11. A system (10) for separating carbon dioxide from a source gas mixture (32) for carbon sequestration, wherein the system (10) comprises:
a first reactor (12), and a second reactor (14);
an inlet gas pipe (16) for guiding the source gas mixture (32) to the first reactor (12), wherein the system (10) is configured to form a carbon dioxide rich liquid in the first reactor (12) at a first pressure based on a carrier liquid (40) and a carbon dioxide fraction of the source gas mixture (32), thereby separating the source gas mixture (32) into a first fraction absorbed in the carbon dioxide rich liquid and a gaseous second fraction depleted in carbon dioxide;
wherein the first reactor (12) is coupled to an outlet pipe (18) for removing the carbon dioxide rich liquid from the first reactor (12);
a pressurizing assembly (24) for increasing a pressure of the carbon dioxide rich liquid removed from the first reactor (12);
and a fluid inlet pipe (26) for supplying the carbon dioxide rich liquid from the pressurizing assembly (24) to the second reactor (14),
wherein the second reactor (14) is arranged to receive the carbon dioxide rich liquid pressurized by the pressurizing assembly (24), and to maintain a reaction of carbon dioxide components absorbed in the carbon dioxide rich liquid and a silicate-based reactant in the second reactor (14) for forming carbonates at a second pressure,
wherein the second pressure is higher than the first pressure.

12. The system (10) of claim 11, wherein the system (10) is configured to form carbon dioxide gas hydrates in the first reactor (12).

13. The system (10) of claim 11 or 12, further comprising a heat pump (46) thermally coupled to the first reactor (12) with a refrigeration side and thermally coupled to the second reactor (14) and/or to a slurry pipe (18, 26) from the first reactor (12) to the second reactor (14) at a heating side.

14. The system (10) of any one of claims 11 to 13, wherein the pressurizing assembly (24) further comprises a slurry pump (36) for increasing a pressure of the carbon dioxide rich liquid removed from the first reactor (12); and/or
wherein the pressurizing assembly (24) further comprises a venturi nozzle (56) coupled to a pressurized water stream and a slurry pipe (18, 26), wherein the venturi nozzle (56) is configured to draw in the carbon dioxide rich liquid and increase the pressure of the carbon dioxide rich liquid towards a pressure of the pressurized water stream.

15. The system (10) of any one of claims 11 to 14, wherein the gas outlet (20) of the first reactor (12) is coupled to a turbine (43) or a turbine part (43) of a turbocharger for compressing the source gas mixture (32) before it enters the first reactor (12); and/or
wherein the gas outlet (20) is thermally coupled to the inlet gas pipe (16) for the source gas mixture (32) for cooling the source gas mixture (32) before the source gas mixture (32) enters the first reactor (12).
